# EUROPÄISCHE PATENTANMELDUNG

(11) **EP 1 185 103 A1**
(43) Veröffentlichungstag der Anmeldung: **06.03.2002**
(21) Anmeldenummer: 00890246.2
(22) Anmeldetag: 10.08.2000
(51) Int. Cl.: H04N 7/173, H04N 5/782

(54) **Verfahren zum Bereitstellen eines Abspielindex für ein Multimediasignal und Verfahren zum Abspielen desselben**

(71) Anmelder: Höffle, Christian, 1100 Wien (AT)
(72) Erfinder: Höffle, Christian, 1100 Wien (AT)
(74) Vertreter: Weiser, Andreas, Dipl.-Ing.

(57) **Zusammenfassung**

Die Erfindung betrifft ein Verfahren zum Bereitstellen eines öffentlich nutzbaren Abspielindex (13, 28, 37, 37') für ein Multimediasignal (6), das ein detektierbares Startsignal (VPS) enthält und dem eine Sendungskennung (29) zugeordnet ist, sowie ein Verfahren zum Abspielen eines solchen Multimediasignales (6), umfassend:
Zugreifen auf einen Internetserver (14) unter Angabe der Sendungskennung (29),
Erhalten eines Abspielindex (13) für das Multimediasignal (6) vom Internetserver (14), und
Adressieren des Mediums (7) mit dem Abspielindex (13), um das Multimediasignal (6) entsprechend dem Abspielindex (13) abzuspielen, wobei der Abspielindex (13) auf den Zeitpunkt des Startsignales (VPS) bezogen wird.

## Beschreibung

### GEBIET DER ERFINDUNG

Die vorliegende Erfindung betrifft ein Verfahren zum Bereitstellen eines öffentlich nutzbaren Abspielindex für ein Multimediasignal, das ein detektierbares Startsignal enthält und dem eine Sendungskennung zugeordnet ist. Die Erfindung betrifft ferner ein Verfahren zum Abspielen eines Multimediasignales, das auf einem Medium mit zeitlich wahlfreiem Zugriff bezüglich eines Startsignales aufgezeichnet ist und dem eine Sendungskennung zugeordnet ist.

### HINTERGRUND DER ERFINDUNG

In der vorliegenden Beschreibung wird der Begriff "Multimediasignal" als Oberbegriff für alle Arten und Kombinationen von Audio-, Video- und sonstigen insbesondere sinnlich wahrnehmbaren Datenstreams verwendet.

Multimediasignale, z.B. Fernsehsendungen, enthalten häufig Abschnitte, die für den Konsumenten von geringem Interesse sind oder sogar als Störung bzw. Unterbrechung aufgefaßt werden, z.B. Werbeeinschaltungen. Während das Betrachten bzw. Abwarten dieser Abschnitte bei der Ausstrahlung des Multimediasignales für den Konsumenten unvermeidlich ist, besteht bei einem auf einem Medium, z.B. einer Videokassette, aufgezeichneten Multimediasignal die Möglichkeit, diese Abschnitte zu überspringen bzw. "vorzuspulen". Bei Bandlaufwerken, wie herkömmlichen Videokassettenrecordern, ist dies ein zeitraubender Vorgang. Es ist mühsam, das Ende des zu überspringenden Abschnittes zu suchen, um den richtigen Wiedereinstiegspunkt für das Abspielen zu finden.

Für das zeitgenaue Lokalisieren des Beginns einer interessierenden Videosendung ist ein System etabliert, das als "video programming system" (VPS) bekannt ist. Bei diesem System senden Fernsehsender in der Austastlücke des Videosignales ein detektierbares Startsignal, das sogenannte VPS-Signal. Das VPS-Signal enthält einen Code, welcher der jeweiligen Sendung zugeordnet ist. Zur einfacheren Handhabung wird als Code die Uhrzeit verwendet, welche der ungefähren Beginnzeit der Sendung entspricht. Mit diesem System kann das Videosignal exakt ab jenem Punkt aufgezeichnet werden, zu dem das VPS-Signal gesendet wurde.

Das VPS-System ermöglicht es jedoch nicht, unerwünschte Abschnitte innerhalb einer aufgezeichneten Sendung, z.B. Werbeeinschaltungen, Zwischenbeiträge oder Moderationen, zu überspringen. Es wurden daher andere Systeme entworfen, welche auf der Praxis der Fernsehsender beruhen, das üblicherweise in einer Ecke des Fernsehbildes eingeblendete Senderlogo während der Dauer einer Werbeeinschaltung auszublenden. Mit Hilfe von Bildverarbeitungsalgorithmen ist es möglich, das Videosignal auf ein über längere Zeit konstantes Element hin zu überwachen und die Abwesenheit eines solchen Elementes als Kennzeichen für einen zu überspringenden Videosignalabschnitt zu verwenden. Die bekannten Systeme können jedoch nur einen groben Anhaltspunkt für einen zu überspringenden Abschnitt liefern. Zum einen werden in der Praxis Senderlogos nicht exakt zu Beginn und am Ende eines Werbeblockes aus- bzw. eingeschaltet, zum anderen werden Eigenwerbungen von Fernsehsendern grundsätzlich nicht mit Senderlogos versehen.

Es besteht daher ein ungebrochener Bedarf nach einem exakt funktionierenden und für den Konsumenten bedienungsfreundlichen System zum Adressieren, Indexieren, Sortieren usw. von Multimediasignalaufzeichnungen, insbesondere im Hinblick auf das Überspringen von unerwünschten Abschnitten des Multimediasignals.

### KURZE ZUSAMMENFASSUNG DER ERFINDUNG

Die Erfindung geht von einer neuen Gattung am Markt erhältlicher Aufzeichnungsmedien aus, welche einen zeitlich wahlfreien Zugriff auf ein aufgezeichnetes Multimediasignal ermöglichen: Magnetplattenspeicher, Halbleiterspeicher, optische Speicher, DVDs usw. Das erfindungsgemäße System setzt sich aus zwei Komponenten zusammen, und zwar einer ersten Verfahrenskomponente, die auf seiten eines Internetdienstleisters ausgeführt wird, und einer zweiten Verfahrenskomponente, welche auf seiten eines Konsumenten ausgeführt wird.

Das Verfahren der ersten Komponente ist ein neuartiges Verfahren zum Bereitstellen eines öffentlich nutzbaren Abspielindex für ein Multimediasignal, das ein detektierbares Startsignal enthält und dem eine Sendungskennung zugeordnet ist, und umfaßt:
Detektieren des Zeitpunktes des Startsignales,
Abspielen zumindest eines Abschnittes des Multimediasignales auf einem Multimediaarbeitsplatz, wobei die Abspielzeit bezüglich des Zeitpunktes des Startsignales gemessen wird,
Auswählen des Beginns einer Szene in dem Abschnitt und Hinzufügen der Startzeit und einer Klassifikation der Szene zu dem Abspielindex,
Wiederholen des Abspielens, Auswählens und Hinzufügens, bis alle Szenen verarbeitet sind, und Speichern des Abspielindex unter der Sendungskennung auf einem Internetserver für den öffentlichen Zugriff.

Das Verfahren der zweiten Komponente der Erfindung ist ein neuartiges Verfahren zum Abspielen eines Multimediasignales, das auf einem Medium mit zeitlich wahlfreiem Zugriff bezüglich eines Startsignales aufgezeichnet ist und dem eine Sendungskennung zugeordnet ist, und umfaßt:
Zugreifen auf einen Internetserver unter Angabe der Sendungskennung,
Erhalten eines Abspielindex für das Multimediasignal vom Internetserver, und
Adressieren des Mediums mit dem Abspielindex, um das Multimediasignal entsprechend dem Abspielindex abzuspielen, wobei der Abspielindex auf den Zeitpunkt des detektierten Startsignales bezogen wird.

Auf diese Weise wird ein System zum indizierten Abspielen eines aufgezeichneten Multimediasignales geschaffen, welches auf eine neuartige Kombination dreier Elemente beruht: der exakten Zeitvorgabe, wie sie ein Startsignalsystem wie das VPS-System bietet, der freien Adressierbarkeit eines Multimediasignalmediums mit wahlfreiem Zugriff sowie der unbegrenzten Distributionsmöglichkeit des Internet. Das System gründet sich auf das Konzept, auf seiten des den Index erstellenden und in das Internet einspeisenden Internetdienstleisters und auf seiten des das Multimediasignal aufzeichnenden Konsumenten parallele, jedoch autarke Zähler bzw. Uhren zu starten, so daß der vom Internetdienstleister erstellte Index zeitgenau zu dem vom Konsumenten aufgezeichneten Multimediasignal paßt.

Das System der Erfindung ermöglicht unterbrechungsfreie, exakt geschnittene und an Kundenwünsche des Konsumenten anpaßbare Abspiel-Darbietungen von Multimediasignalaufzeichnungen. Das System trägt der Schmalbandigkeit heutiger Internetverbindungen Rechnung, indem nur der Abspielindex über das Internet bezogen wird, wogegen das Multimediasignal über herkömmliche Breitbandverbindungen, wie terrestrischen Funk, Satellitenfunk oder Kabelfernsehen, verteilt wird.

Eine bevorzugte Ausführungsform der internetdienstleisterseitigen Verfahrenskomponente der Erfindung, die für Multimediasignale bestimmt ist, die eine detektierbare Szenenkennung enthalten (z.B. ein eingeblendetes Senderlogo), zeichnet sich dadurch aus, daß jene Abschnitte abgespielt werden, die in zeitlicher Umgebung zu dem detektierten Ein- oder Ausschalten einer vorgegebenen Szenenkennung liegen. Auf diese Weise wird das Auswählen einer Szene am Multimediaarbeitsplatz erleichtert, da nicht mehr das gesamte Multimediasignal sondern nur mehr bestimmte Abschnitte desselben analysiert werden müssen.

Das Verfahren wird noch weiter vereinfacht, wenn gemäß einem weiteren Merkmal der Erfindung vorgesehen wird,
daß der Zeitpunkt des Ein- oder Ausschaltens einer vorgegebenen Szenenkennung detektiert und zusammen mit einer Klassifikation dieser Szenenkennung als vorläufiger Eintrag gespeichert wird,
daß jener Abschnitte abgespielt wird, der in zeitlicher Umgebung zu diesem Zeitpunkt liegt, und
daß das genannte Hinzufügen auf Grundlage des vorläufigen Eintrages erfolgt.

In beiden Varianten wird bevorzugt als Szenenkennung ein eingeblendetes Senderlogo verwendet. Alternativ könnte jedoch auch jede andere detektierbare Szenenkennung verwendet werden, beispielsweise vorbekannte Untertitel, die eingeblendet werden, oder spezielle Teletextinformationen, die in der Austastlücke übertragen werden und für eine gerade gesendete Szene kennzeichnend sind.

In der vorliegenden Beschreibung bezeichnet der Ausdruck "Szene" einen zeitlich begrenzten Unter-Abschnitt in einem Zeitabschnitt des Multimediasignales, der automatisch oder manuell klassifizierbar ist.

Gemäß einer bevorzugten Ausführungsform der Erfindung wird der Zugriff auf den Internetserver vergebührt. Für die Vergebührung kann jede in der Technik bekannte Verrechnungs- oder Zahlungsform verwendet werden, z.B. eine Abrechnung über einen Internetzugangsprovider, die Telefonrechnung, die Kabelfernsehrechnung, die Stromrechnung, Kreditkarten, Bankkonten, Gutscheine, Cybercash, Tokens, usw.

Eine bevorzugte Ausführungsform beider erfindungsgemäßen Verfahrenskomponenten besteht darin, daß das Startsignal ein VPS-Signal ist. Auf diese Weise kann auf das eingeführte VPS-System zurückgegriffen werden, um die Zeitsynchronisierung zwischen der Aufzeichnung des Konsumenten einerseits und dem Empfang bzw. der Aufzeichnung des Internetdienstleisters andererseits herzustellen.

Der Begriff "Zeit" kann in der vorliegenden Beschreibung sowohl kontinuierlich als auch diskret aufgefaßt werden. Eine bevorzugte Form der Diskretisierung bzw. Quantisierung der Zeit besteht darin, daß die Zeitpunkte, die Abspielzeit und der Abspielindex in Einzel- oder Halbbildern des Multimediasignales gemessen werden. Auf diese Weise kann das Abspielen bildgenau indexiert werden.

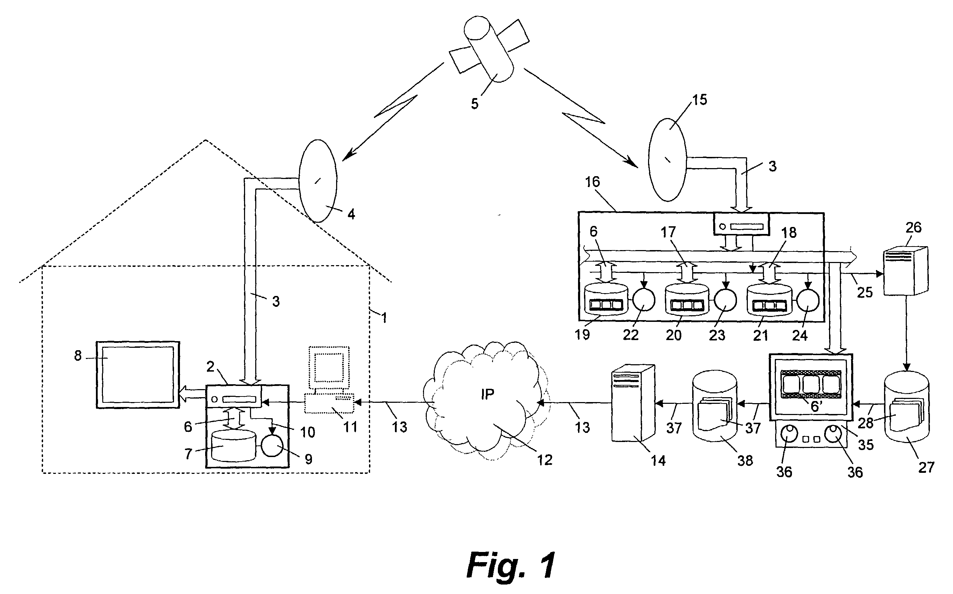

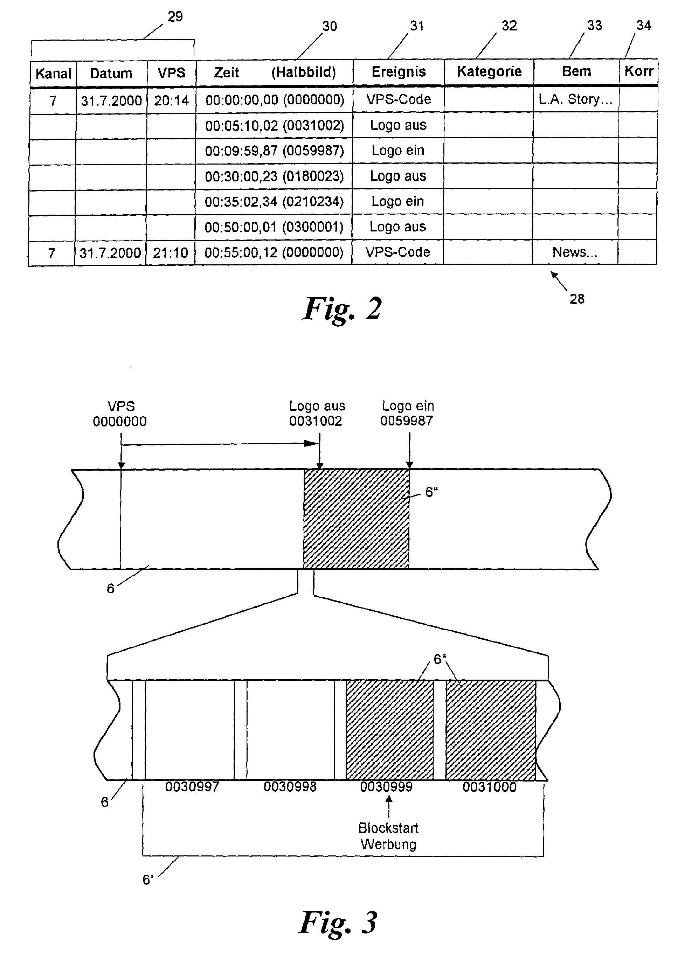

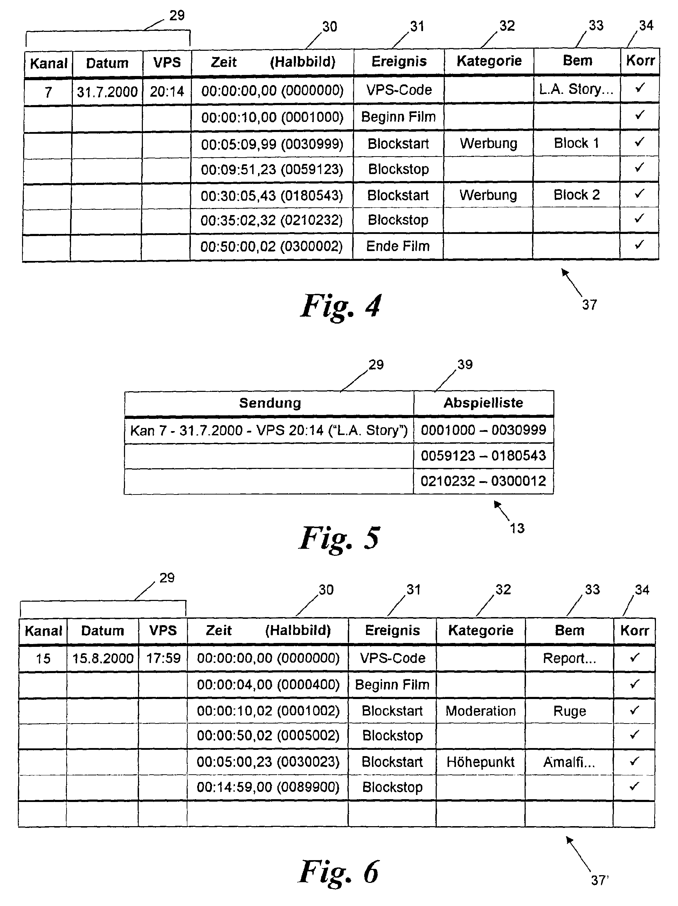

Die Erfindung wird nachstehend anhand von in den Zeichnungen dargestellten Ausführungsbeispielen näher erläutert. In den Zeichnungen zeigt Fig. 1 ein schematisches Blockschaltbild der erfindungsgemäßen Verfahren, angewandt auf Videosignale, die Fig. 2 einen Zustand des Abspielindex bei seiner Erzeugung, Fig. 3 schematisch das Auswählen einer Szene auf einer Videoarbeitsstation, Fig. 4 den Abspielindex in einem überarbeiteten Zustand, Fig. 5 eine Filterung des Abspielindex von Fig. 4, welche direkt zur Adressierung der Videosignalaufzeichnung verwendet wird, und Fig. 6 ein weiteres Beispiel eines Abspielindex im Zustand seiner Erzeugung.

Fig. 1 zeigt die Systemkomponenten, die zur Ausführung der Verfahrenskomponenten der Erfindung erforderlich sind. Die in der linken Hälfte von Fig. 1 dargestellten Komponenten dienen der Durchführung der Verfahrenskomponente, die auf seiten des Konsumenten ausgeführt wird, und die in der rechten Hälfte von Fig. 1 dargestellten Komponenten der Durchführung der Verfahrenskomponente, die auf seiten eines Internetdienstleisters ausgeführt wird.

Zunächst wird auf die linke Hälfte von Fig. 1 Bezug genommen. Am Ort 1 eines Konsumenten befindet sich ein Videorecorder 2, der ein breitbandiges Empfangssignal 3 von einer Satellitenempfangsanlage 4 empfängt. Die Satellitenempfangsanlage 4 empfängt ihrerseits das Empfangssignal von einem (nicht dargestellten) Fernsehsender über einen Satelliten 5.

Der Videorecorder 2 selektiert aus dem Empfangssignal 3 ein gewünschtes Videosignal 6 auf einem ausgewähltem Kanal und zeichnet dieses auf einem Aufzeichnungsmedium 7 mit zeitlich wahlfreiem Zugriff auf, im dargestellten Fall auf einer Festplatte. Alternative kann jedes andere Medium 7 mit wahlfreiem Zugriff verwendet werden, z.B. ein Halbleiterspeicher, ein optischer Speicher, eine DVD, ein Bandlaufwerk mit Zeitkodierung usw.

An den Videorecorder 2 ist ein Fernsehapparat, ein Monitor 8 oder ein sonstiges Bildwiedergabesystem angeschlossen, auf welchem das Videosignal 6 und/oder seine Aufzeichnung auf dem Medium 7 abgespielt werden können.

Das Videosignal 6 enthält zu einem bestimmten Zeitpunkt ein detektierbares Startsignal, welches den Beginn einer bestimmten Fernsehsendung kennzeichnet. Das Startsignal ist z.B. ein VPS-Signal. Das Startsignal kann zusammen mit dem Videosignal 6 auf dem Medium 7 aufgezeichnet sein und somit zur Auswertung durch den Videorecorder 2 beim Abspielen des Multimediasignales 6 zur Verfügung stehen. Bevorzugt wird das Startsignal jedoch nicht mit dem Videosignal aufgezeichnet, sondern im Videorecoder 2 nur detektiert und dazu verwendet, die Aufzeichnung des Videosignals 6 auf dem Medium 7 zu starten.

Der Videorecorder 2 ist so in der Lage, alle zeitlichen Adressierungen des auf dem Medium 7 aufgezeichneten Videosignales 6 auf den Zeitpunkt des Startsignales zu beziehen, d.h. relativ zu diesem Zeitpunkt zu zählen bzw. zu messen. Zu diesem Zweck verfügt der Videorecorder 2 über einen Zähler 9, welcher die Aufzeichnungs- und Abspielzeit in Stunden/Minuten/Sekunden/Hundertstelsekunden und/oder in Bildern oder Halbbildern (Frames) des Videosignales 6 messen bzw. zählen kann. Bei Auftreten eines VPS-Signals im Videosignal 6 stellt der Videorecorder 2 den Zähler 9 über eine Leitung 10 auf Null zurück und startet die Aufzeichnung des Videosignals 6, soferne sie nicht bereits läuft.

Der Videorecorder 2 ist mit einer Schnittstelle ausgestattet, über welche er direkt oder unter Zwischenschaltung eines Rechners (PCs) 11 an das Internet 12 angeschlossen werden kann. Mit Hilfe dieser Schnittstelle bezieht der Videorecorder 2 einen Abspielindex 13 über das Internet 12 von einem Internetserver 14 eines Internetdienstleisters zur Adressierung des Mediums 7, wie späterer noch ausführlicher beschrieben wird.

Um einen zu dem aufgezeichneten Videosignal 6 passenden Abspielindex 13 zu beziehen, wird in der Kommunikation mit dem Internetdienstleister eine für das jeweilige Videosignal eindeutige Sendungskennung verwendet. Die Sendungskennung besteht beispielsweise aus dem Kanal, der aus dem Satellitenempfangssignal 3 ausgewählt wurde, um das Videosignal 6 zu empfangen, dem Datum und der Uhrzeit des Beginns der Aufzeichnung des Videosignales 6 sowie dem ersten darin detektierten Startsignal (VPS-Code). Die Sendungskennung wird über das Internet 12 an den Internetserver 14 des Internetdienstleisters als Anforderung gesendet, um als Antwort den zugeordneten Abspielindex 13 zu erhalten.

Der Videorecorder 2 und/oder der Rechner 11 können so programmiert sein, daß die Anforderung und der Empfang des Abspielindex 13 automatisiert abläuft. Beispielsweise kann der Videorecorder 2 nach Ablauf einer vorgegebenen Zeitspanne (z.B. einige Stunden), von der anzunehmen ist, daß sie für den Internetdienstleister ausreicht, einen entsprechenden Abspielindex im Internet zur Verfügung zu stellen, automatisch den Internetserver 14 anwählen und den passenden Abspielindex 13 beziehen. Alternativ kann dies vom Benutzer durch Drücken einer Taste auf dem Videorecorder 2 willentlich ausgelöst werden. Es ist jedoch auch möglich, z.B. mit Hilfe des Rechners 7 den Internetserver 14 des Internetdienstleisters abzufragen und verschiedene Abspielindizes 13 nach bestimmten Kriterien zusammenzustellen und zu beziehen, um eines oder mehrere auf dem Medium 7 aufgezeichnete Videosignale 6 entsprechend indiziert, sortiert oder geschnitten abzuspielen. Eine weitere Variante besteht darin, daß ein oder mehrere Abspielindizes 13 mittels E-Mail, Internet-Channels oder anderer vom Internetdienstleister ausgehender Push-Technologien zum Konsumenten gesandt werden, z.B. im Rahmen eines regelmäßigen Abonnements.

Es wird nun auf die rechte Hälfte von Fig. 1 Bezug genommen, um die Systemkomponenten und das Verfahren auf seiten des Internetdienstleisters zu beschreiben.

Am Ort des Internetdienstleisters befindet sich eine Satellitenempfangsanlage 15, welche dasselbe Empfangssignal 3 vom Satelliten 5 erhält wie die Satellitenempfangsanlage 4. Die Satellitenempfangsanlage 15 speist einen Videorecorder 16, der gleichzeitig mehrere der im Empfangssignal 3 enthaltenen Videosignale aufzeichnen kann, von denen drei Videosignale 6, 17 und 18 stellvertretend dargestellt sind. Die Videosignale 6, 17 und 18 werden jeweils auf einem Medium 19, 20 bzw. 21 mit zeitlich wahlfreiem Zugriff aufgezeichnet. Die Medien 19, 20, 21 können auch durch ein einziges, gemeinsames Medium gebildet sein, z.B. eine Festplatte.

Jedem Aufzeichnungsmedium 19, 20, 21 ist ein Zähler 22, 23 bzw. 24 zugeordnet, welcher die Aufzeichnungs- bzw. Abspielzeit in Stunden/Minuten/Sekunden/Hundertstelsekunden und/oder Bildern oder Halbbildern (Frames) mißt.

Der Videorecorder 16 detektiert die in jedem Videosignal 6, 17, 18 enthaltenen detektierbaren Startsignale (z.B. VPS-Codes) und setzt beim Auftreten eines Startsignales den zugeordneten Zähler 22, 23, 24 auf Null und startet die entsprechende Aufzeichnung, soferne sie nicht schon läuft. Die Information über das Auftreten eines Startsignales wird auch zusammen mit einer Information hinsichtlich des Kanales, auf welchem das jeweilige Videosignal empfangen wurde, über eine Leitung 25 an einen Rechner 26 geleitet. Der Rechner 26 speichert die Kanalinformation, die aktuelle Uhrzeit und das detektierte Startsignal in einer Datenbank 27 als vorläufiger Abspielindex 28.

Der Rechner 26 bzw. die Datenbank 27 können ferner (auf nicht näher dargestellt Weise) mit grundlegenden Informationen über das Fernsehprogramm versorgt sein, so daß anhand des Kanales und der Uhrzeit auch eine vorläufige Beschreibung und Klassifizierung des aufgezeichneten Videosignales 6, 17, 18 in den vorläufigen Abspielindex 28 hingetragen werden kann.

Der Videorecorder 16 ist befähigt, eine in einem Videosignal 6, 17, 18 enthaltene detektierbare Szenenkennung z.B. ein Senderlogo, zu detektieren. Das detektierte Ein- oder Ausschalten der Szenenkennung wird zusammen mit einer Information über den aktuellen Stand des entsprechenden Zählers 22, 23, 24 an den Rechner 26 weitergegeben, welcher dies im vorläufigen Abspielindex 28 einträgt.

Fig. 2 zeigt ein Beispiel eines vorläufigen Abspielindex 28 für das Videosignal 6, das beispielsweise auf dem Kanal 7 des Satellitenempfangssignales 3 empfangen wird. Die Abspielindizes für die Videosignale 17, 18 sind in gleicher Weise aufgebaut und können in gesonderten Listen gespeichert sein. Es können aber auch alle Einträge aller Abspielindizes in einer gemeinsamen Liste gespeichert werden, welche beispielsweise anhand des Kanales sortiert oder gefiltert werden kann, um Abspielindizes für die einzelnen Multimediasignale zu erhalten.

In dem vorläufigen Abspielindex 28 von Fig. 2 bezeichnen die ersten drei Spalten "Kanal", "Datum" und "VPS-Code" eine bestimmte Fernsehsendung und stellen eine eindeutige Sendungskennung 29 dar. Selbstverständlich sind auch alternative Arten von Sendungskennungen 29 möglich, beispielsweise eindeutige Codes nach dem Show-View® -System, usw.

Die vierte Spalte 30 gibt den aktuellen Zählerstand des Zählers 22 wieder, und zwar im Format "Stunden:Minuten:Sekunden, Hunderstelsekunden" bei Zeitzählung und/oder im Format "Framenummer" bei (in Klammern) Bild- oder Halbbildzählung. Die fünfte Spalte 31 zeigt das Ereignis zu diesem Zeitpunkt, z.B. das Auftreten des Startsignals (VPS-Signals), welches mit einem Rücksetzen des Zählers 22 verbunden ist, oder das Ein-bzw. Ausschalten einer Szenenkennung (z.B. Senderlogo), usw.

Die Klassifizierung in der sechsten Spalte 32 "Kategorie" ist im vorläufigen Abspielindex 28 noch leer. Hingegen können aus einer bestehenden Datenbank (nicht dargestellt) Informationen über die durch die Sendungskennung 29 referenzierte Fernsehsendung in einer Spalte 33 eingetragen werden. Spalte 34 enthält schließlich eine Angabe darüber, ob ein Eintrag im Abspielindex vorläufig oder bereits korrigiert und zur Verteilung freigegeben wurde; bei einem vorläufigen Abspielindex, wie er in Fig. 2 gezeigt ist, ist diese Spalte noch leer.

Die auf den Medien 19, 20, 21 aufgezeichneten Videosignale 6, 17, 18 werden einem Multimediaarbeitsplatz 35, im gezeigten Beispiel für Videosignale einem Videoarbeitsplatz, zugeführt, welcher ihre bild- oder halbbildweise Betrachtung ermöglicht. In Fig. 3 ist beispielhaft dargestellt, wie ein Abschnitt 6' des Videosignales 6 mit Hilfe von Bildlaufreglern 36 bildweise vor- und zurück abgespielt wird, wobei die aktuelle Abspielzeit bezüglich des Zeitpunktes des Startsignales gemessen wird. Mit Hilfe der Videoarbeitsstation wird nun der exakte Beginn einer interessierenden Szene 6" des Videosignales 6 ausgewählt und ihre Startzeit, d.h. der Stand des Zählers 22, zusammen mit einer Klassifikation der Szene dem Abspielindex 28 hinzugefügt bzw. ein bereits bestehender Eintrag des vorläufigen Abspielindex 28 überarbeitet.

Fig. 4 zeigt das Ergebnis einer vollständigen Überarbeitung aller Einträge des vorläufigen Abspielindex 28 von Fig. 2 zu einem Abspielindex 37. Der Abspielindex 37 wird von der Videoarbeitsstation in einer Datenbank 38 gespeichert, deren Inhalt über den Internetserver 14 für den öffentlichen Zugriff über das Internet 12 bereitsteht.

Die Datenbank 38 kann dieselbe Datenbank sein wie die Datenbank 27. In diesem Fall erhalten alle überarbeiteten Einträge des Abspielindex 28 einen entsprechenden Vermerk in der Spalte 34 und bilden so gleichzeitig den Abspielindex 37. Bei der Überarbeitung werden entweder neue Einträge dem Abspielindex hinzugefügt (siehe z.B. das Ereignis "Beginn Film" in Fig. 4), oder es werden aufgrund von detektierten Szenenkennungen bereits vorhandene Einträge überarbeitet und korrigiert (siehe z.B. Zeilen 4 bis 8 in Fig. 4). Der Abspielindex 37 kann in der Spalte 32 "Kategorie" eine zusätzliche manuelle Klassifikation aufweisen und in der Spalte 33 "Bemerkung" weitere Informationen zu der betreffenden Szene. Ein Vergleich der Fig. 2 und 4 zeigt, daß z.B. der Eintrag "Blockstart-Werbung-Block 1" in Zeile 4 von Fig. 4 auf dem vorläufigen Eintrag "Logo aus" von Zeile 3 von Fig. 2 beruht und anhand der Bearbeitungsschritte gemäß Fig. 3 korrigiert wurde.

Der Abspielindex 37 kann auf dem Internetserver 14 so aufbereitet dargeboten werden, daß er nach jedem beliebigen Kriterium durchsucht und gefiltert werden kann. Beispielsweise kann der Abspielindex 37 nach dem Kriterium "werbefrei" gefiltert werden. Fig. 5 zeigt das Ergebnis 13 einer derartigen Filterung des Abspielindex 37. Zu einer vorgegebenen Sendungskennung 29 ergibt sich eine Abspielliste 39, welche nur mehr jene Bildnummern anführt, die zur Adressierung des Mediums 7 des Konsumenten verwendet werden, um das Filmbeispiel "L.A. Story" ohne Werbeunterbrechungen kontinuierlich abzuspielen.

Fig. 6 zeigt bei 37' ein alternatives Beispiel eines Abspielindex ähnlich dem Abspielindex 37 von Fig. 4. Das Beispiel veranschaulicht, daß beliebige Szenenklassifizierungen in der Spalte 32 eingetragen werden können, so daß eine Sendung beispielsweise "ohne Moderation" abgespielt werden kann, oder nur die "Höhepunkte" der Sendung usw.

Der Zugriff auf den Internetserver 14 bzw. auf die in der Datenbank 38 gespeicherten Abspielindizes kann auf jede in der Technik bekannte Art vergebührt werden, z.B. mittels Telefonrechnung-, Datennetz-, Bankkonto- oder Kreditkartenabbuchung, durch Bezahlung mittels "Cyber-Cash" usw. Bevorzugt werden für das Beziehen eines Abspielindex 13 nur geringe Gebühren verrechnet, so daß Internet-Mikrozahlungssysteme besonders geeignet sind.

Es versteht sich, daß die dargestellten Komponenten, mit welchen die erfindungsgemäßen Verfahren ausgeführt werden können, sowohl mittels Hardware- als auch Software realisiert werden können. Für den Fachmann ist klar, daß z.B. die in der rechten Hälfte von Fig. 1 gezeigten Komponenten mit Hilfe von Programmobjekten realisiert werden können, die auf einem Universalrechner implementiert sind, welcher einerseits Zugang zu Multimediaempfangssignalen und anderseits eine Schnittstelle zum Internet hat. In gleicher Weise können die in der linken Hälfte von Fig. 1 gezeigten Komponenten mit Hilfe eines einzigen, entsprechend programmierten Benutzerendgerätes realisiert werden, beispielsweise einem internetfähigen Fernsehapparat mit Aufzeichnungsfunktion oder einem PC mit Videoeingangskarte.

Die Erfindung eignet sich nicht nur zum Verarbeitung von Multimediasignalen sondern aller anderen Arten von "Online-Streams", z.B. Audiosignalen (Radio), Internetstreams wie MPEG- oder Realplayer® -Streams usw. Alles, was in der vorliegenden Beschreibung in Bezug auf Video und Videosignale gesagt wurde, trifft daher in gleicher Weise auf alle anderen Arten von Multimedia-Signalen zu, wobei die Begriffe "Bild" z.B. in Bezug auf Audio entsprechend durch "Silbe", "Phonem", "Schwingung" usw. zu ersetzen sind. Die zu verarbeitenden Multimediasignale können nicht nur über Satellitenverbindungen verteilt werden, sondern auf alle möglichen Arten der Verteilung von Broadcast- bzw. Online-Streams bezogen werden, sei es über Kabel, terrestrischen Funk, das Internet selbst oder andere Telekommunikationsnetze.

## Patentansprüche

1. Verfahren zum Bereitstellen eines öffentlich nutzbaren Abspielindex (13, 28, 37, 37') für ein Multimediasignal (6), das ein detektierbares Startsignal (VPS) enthält und dem eine Sendungskennung (29) zugeordnet ist, umfassend:
Detektieren des Zeitpunktes des Startsignales (VPS),
Abspielen zumindest eines Abschnittes (6') des Multimediasignales (6) auf einem Multimediaarbeitsplatz (35), wobei die Abspielzeit bezüglich des Zeitpunktes des Startsignales (VPS) gemessen wird,
Auswählen des Beginns einer Szene (6") in dem Abschnitt (6') und Hinzufügen der Startzeit und einer Klassifikation der Szene (6") zu dem Abspielindex (13, 28, 37, 37'),
Wiederholen des Abspielens, Auswählens und Hinzufügens, bis alle Szenen (6") verarbeitet sind, und Speichern des Abspielindex (13, 28, 37, 37') unter der Sendungskennung (29) auf einem Internetserver (14) für den öffentlichen Zugriff.

2. Verfahren nach Anspruch 1 für Multimediasendungen, die eine detektierbare Szenenkennung enthalten, **dadurch gekennzeichnet, daß** jene Abschnitte (6') abgespielt werden, die in zeitlicher Umgebung zu dem detektierten Ein- oder Ausschalten einer vorgegebenen Szenenkennung liegen.

3. Verfahren nach Anspruch 1 für Multimediasendungen, die eine detektierbare Szenenkennung enthalten, **dadurch gekennzeichnet,**
**daß** der Zeitpunkt des Ein- oder Ausschaltens einer vorgegebenen Szenenkennung detektiert und zusammen mit einer Klassifikation dieser Szenenkennung als vorläufiger Eintrag gespeichert wird,
**daß** jener Abschnitte (6') abgespielt wird, der in zeitlicher Umgebung zu diesem Zeitpunkt liegt, und
**daß** das genannte Hinzufügen auf Grundlage des vorläufigen Eintrages erfolgt.

4. Verfahren nach Anspruch 2 oder 3, **dadurch gekennzeichnet, daß** als Szenenkennung ein eingeblendetes Senderlogo verwendet wird.

5. Verfahren nach einem der Ansprüche 1 bis 4, **dadurch gekennzeichnet, daß** der Zugriff auf den Internetserver (14) vergebührt wird.

6. Verfahren zum Abspielen eines Multimediasignales (6), das auf einem Medium (7) mit zeitlich wahlfreiem Zugriff bezüglich eines Startsignales (VPS) aufgezeichnet ist und dem eine Sendungskennung (29) zugeordnet ist, umfassend:
Zugreifen auf einen Internetserver (14) unter Angabe der Sendungskennung (29),
Erhalten eines Abspielindex (13) für das Multimediasignal (6) vom Internetserver (14), und
Adressieren des Mediums (7) mit dem Abspielindex (13), um das Multimediasignal (6) entsprechend dem Abspielindex (13) abzuspielen, wobei der Abspielindex (13) auf den Zeitpunkt des Startsignales (VPS) bezogen wird.

7. Verfahren nach einem der Ansprüche 1 bis 6, **dadurch gekennzeichnet, daß** der Zugriff auf den Internetserver (14) vergebührt wird.

8. Verfahren nach einem der Ansprüche 1 bis 7 für Videosignale, **dadurch gekennzeichnet, daß** die Zeitpunkte, die Abspielzeit und der Abspielindex in Einzel- oder Halbbildern des Videosignales (6) gemessen werden.
